# EUROPEAN PATENT APPLICATION

(11) **EP 1 610 572 A2**
(43) Date of publication of application: **28.12.2005**
(21) Application number: 05013577.1
(22) Date of filing: 23.06.2005
(51) Int. Cl.: H04Q 7/32

(54) **Call connection in mobile terminal**

(30) Priority: 24.06.2004 KR 2004047790
(71) Applicant: LG ELECTRONICS INC., Seoul (KR)
(72) Inventor: Song, Kyong-Soo, Deungchon 1-Dong,Gangseo-Gu, Seoul (KR)
(74) Representative: von Hellfeld, Axel

(57) **Abstract**

A method for managing call connection in a mobile terminal comprises detecting a moving speed of the mobile terminal and preventing call connection when the mobile terminal is moving at greater than a predetermined speed. The method may also comprise storing call information when the mobile terminal is moving at greater than the predetermined speed. The predetermined speed may be an average speed over a predetermined time period. The detecting of the moving speed of the mobile terminal may comprise determining a location of the mobile terminal with respect to a plurality of cells within a predetermined time period. The detecting of the moving speed of the mobile terminal may further comprise counting a number of handoffs occurring during a predetermined time period.

## Description

### FIELD OF THE INVENTION

The present invention relates generally to a mobile terminal and, more particularly, to call connection in a mobile terminal.

### BACKGROUND OF THE INVENTION

In the context of a mobile communication network providing mobile communication service, various communication states of a mobile terminal (terminal) include an access state, an idle state and a traffic state.

The access state of the mobile terminal refers to a state in which a base station transmits a channel assignment message with respect to an external call request. The base station also transmits an alert with information message to a call connection-requested terminal. The channel assignment message is a signal transmitted by the base station to connect with the mobile terminal for communication. The alert with information message is transmitted following the channel assignment message from the base station. When the mobile terminal receives a signal corresponding to the channel assignment message, a bell ringing sound is made. The idle state of the mobile terminal refers to a state in which the terminal is in a call standby state (call waiting state) and is not receiving a call request from outside. The traffic state of the mobile terminal refers to a state in which a user presses a call button on the mobile terminal to communicate with another party. The bell ringing sound is made after the terminal receives the alert with information message.

The three types of communication states affect the type and quality of mobile communication service delivered depending on mobile communication standards applied to the mobile communication network. The mobile communication standards applied to the mobile communication network developed from IS-95A to IS-95B, and more recently, IMT-2000 have been widely commercialized. Whereas the IS-95A uses only one radio channel, the IS-95B is able to allocate a maximum 8 radio channels simultaneously, allowing for fast data transmission. The IS-95B provides high speed data service and a control power level having 3 stages. Furthermore, the IS-95B has been enhanced to support "handoff" while a user is driving with a mobile terminal at high speed.

The "handoff" refers to a function for maintaining a call when a terminal user moves from one base station to another base station. Handoff of the terminal may be either a soft handoff generated between base stations, a hard handoff generated between exchanges, or a softer handoff generated between sectors in a base station. In the soft handoff (referred to hereinafter as 'handoff') one base station which has a signal of the terminal cuts off the signal when another base station receives it.

In particular, the handoff may be made in the access state with the introduction of the IS-95B. Accordingly, when the terminal is moving at high speed, the bell ringing sound may be made when the terminal receives the channel assignment message of the other party. The user may then press the call button on the terminal to enter the traffic state to communicate with the other party to which the call connection has been requested.

However, hearing the bell ringing sound while the terminal user (driver) is driving the car at high speed may distract the user and possibly cause an accident.

### SUMMARY OF THE INVENTION

Accordingly, the present invention is directed to call connection in a mobile terminal that substantially obviates one or more problems due to limitations and disadvantages of the related art.

An object of the present invention is to automatically prevent call connection of an external call to a terminal of a driver who is driving at high speed and store corresponding call information. Another object of the present invention is to inform a user about a stored call when the user is driving at a low speed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a method for managing call connection in a mobile terminal comprises detecting a moving speed of the mobile terminal and preventing call connection when the mobile terminal is moving at greater than a predetermined speed. The method may also comprise storing call information when the mobile terminal is moving at greater than the predetermined speed.

The predetermined speed may be an average speed over a predetermined time period. The detecting of the moving speed of the mobile terminal may comprise determining a location of the mobile terminal with respect to a plurality of cells within a predetermined time period. The detecting of the moving speed of the mobile terminal may further comprise counting a number of handoffs occurring during a predetermined time period. A handoff may occur when a transmission power level of a neighboring base station is at least 3dB greater than a transmission power level of an active base station. The detecting of the moving speed of the mobile terminal may further comprise determining a high speed if a count value obtained by counting the number of handoffs is greater than or equal to a predetermined reference value, and determining a low speed if the count value obtained by counting the number of handoffs is less than the predetermined reference value. The preventing of call connection may further comprise setting a flag. For example, the flag may be set at a first level to prevent call connection.

The call information may comprise at least one of a phone number of a mobile terminal requesting call connection and a call request time. The method may further comprise releasing the preventing of the call connection when stored call information is provided to a user. The releasing of the preventing of the call connection may further comprise setting a flag. For example, the flag may be set at a second level to release the preventing of the call connection. The method may further comprise providing stored call information to a user. The stored call information may be provided to the user when a count value of the number of handoffs occurring during a predetermined time period is less than a reference value. The reference value may be pre-set by the user. The detecting of the moving speed of the mobile terminal may alternatively comprise determining a location of the mobile terminal using a global positioning system.

In another embodiment, a method for managing call connection in a mobile terminal comprises counting a number of handoffs that occur in response to movement of the mobile terminal during a predetermined time period and comparing the number of handoffs against a reference value. The method also comprises preventing call connection associated with a call connection request if the number of handoffs is greater than the reference value. The method may further comprise storing call information associated with the call connection request if the call connection request is received while call connection is prevented and releasing the preventing of the call connection associated with the call connection request if the number of handoffs is less than the reference value. The method may further comprise providing stored call information associated with the call connection request to a user in response to the releasing of the preventing of the call connection associated with the call connection request. The reference value may be set by the user and may indicate a number of handoffs occurring during the predetermined time period corresponding to a certain moving speed of the mobile terminal.

In another embodiment, a mobile terminal configured to manage call connection comprises a microprocessor configured to count a number of handoffs during a predetermined time period as a user of the mobile terminal travels within a mobile communication network to detect a moving speed of the mobile terminal, the microprocessor also configured to automatically prevent call connection or to release prevention of call connection, based on a comparison of the number of handoffs against a reference value. The mobile terminal also comprises a memory communicatively coupled to the microprocessor, configured to store call information when a call connection request is received from another mobile terminal while call connection is being prevented. The mobile terminal also may comprise a notifying unit communicatively coupled to the microprocessor, configured to notify the user that call information associated with the call connection request is stored in the memory of the mobile terminal when the call connection to the another mobile terminal is not being prevented.

The mobile terminal may further comprise a display communicatively coupled to the microprocessor, configured to display the call information associated with the call connection request stored in the memory. The mobile terminal may further comprise a key pad communicatively coupled to the microprocessor, configured to enable the user to select and input the reference value. The moving speed of the mobile terminal may be determined, in the microprocessor, to be a high speed if the number of the handoffs is equal to or greater than the reference value, and a low speed if the number of handoffs is less than the reference value. The call connection may be prevented and the call information associated with the call connection request may be stored to the memory if the moving speed of the mobile terminal is the high speed. Alternatively, the call connection may be released or not prevented and stored call information associated with the call connection request may be provided to the user if the moving speed of the terminal is the low speed.

The notifying unit may comprise a speaker to notify the user that the call information associated with the call connection request is stored in the memory, by a notification sound. Furthermore, the notification unit may comprise a vibration device to notify the user that the call information associated with the call connection request is stored in the memory, by vibration.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Figure 1 is a flow diagram illustrating a process of preventing call connection to a mobile terminal, according to an embodiment of the present invention.

Figure 2 is a flow diagram illustrating a process from call connection prevention to releasing of call connection prevention of the mobile terminal, according to an embodiment of the present invention.

Figure 3 is a diagram illustrating occurrence of handoff during a predetermined time period, according to an embodiment of the present invention.

Figure 4 is a block diagram illustrating a mobile terminal configured to implement a call connection method, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

When a user (terminal user) of a mobile terminal (terminal) is traveling, i.e. driving at a high speed, if the user attempts to answer a call, he may be distracted and an accident may result. Thus, to provide for safe driving, call connection is automatically prevented while a car is moving at a high speed and corresponding call information is stored. Then, when the car is stopped or moving at a low speed, the user may be informed of the stored call information.

The terminal may preferably include a microprocessor unit (MPU) configured to control a program for executing the call connection method, an input device, such as for example, a key pad to be used for setting or releasing the call connection method, an output unit, such as for example, a liquid crystal display (LCD) and a storage unit for storing the program and call information.

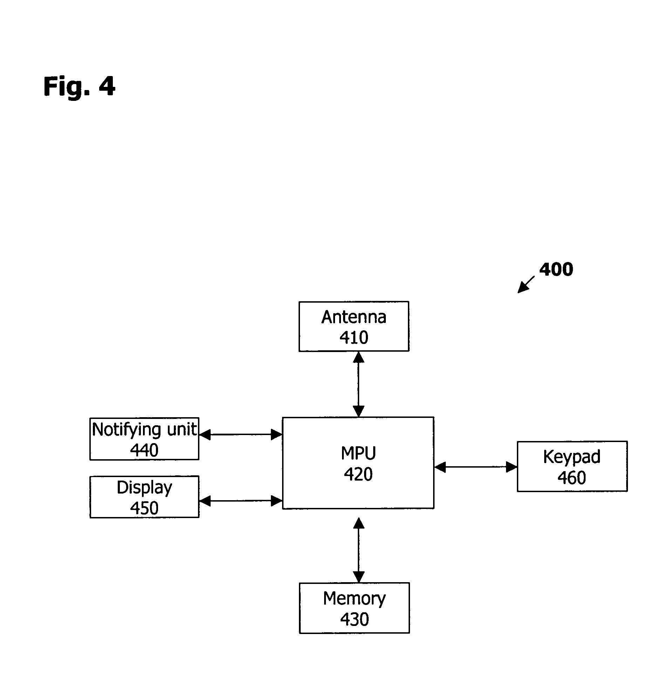

Figure 4 is a block diagram illustrating a mobile terminal configured to implement a call connection method, according to an embodiment of the present invention.

Referring to Figure 4, a mobile terminal 400 includes an antenna 410 configured to receive a signal transmitted from a base station of a mobile communication network. The mobile terminal 400 also includes a microprocessor unit (MPU) 420 configured to count a number of times that a handoff occurs during a predetermined time period while the terminal user is driving within a mobile communication network in order to detect the speed at which the mobile terminal is moving. The MPU 420 is also configured to prevent call connection to another party and to release prevention of call connection based on the speed of the mobile terminal. The mobile terminal 400 also includes a memory 430 configured to store corresponding call information when a channel assignment message is received from the another party while call connection to the another party is being prevented. The mobile terminal 400 also includes a notifying unit 440 configured to notify the user of the call information in the memory 400. The mobile terminal 400 also includes a display 450 configured to display the call information stored in the memory 430. The mobile terminal 400 also includes a key pad 460 configured to allow the user to personally select and input a reference value of an allowable number of times that a handoff occurs during a predetermined time period before the call connection is automatically prevented.

In detecting the moving speed of the mobile terminal, the microprocessor 420 may preferably provide control such that if the number of times that handoff occurs is greater than or equal to the reference value input by the user, then the MPU 420 may determine that the mobile terminal is moving at a high speed. Call connection with respect to a channel assignment message may then be automatically prevented and the corresponding call information may be stored in the memory 430.

Alternatively, if the number of times that handoff occurs is less than or equal to the reference value input by the user, then the MPU 420 may determine that the mobile terminal is moving at a low speed. Call connection prevention may be automatically released and the corresponding call information may be provided to the user.

The notifying unit 440 may preferably include a speaker for notifying the user that call information is available, via a beeping or bell sound. Alternatively, the notifying unit 440 may include a vibrator for notifying the user that call information is available, via a vibration.

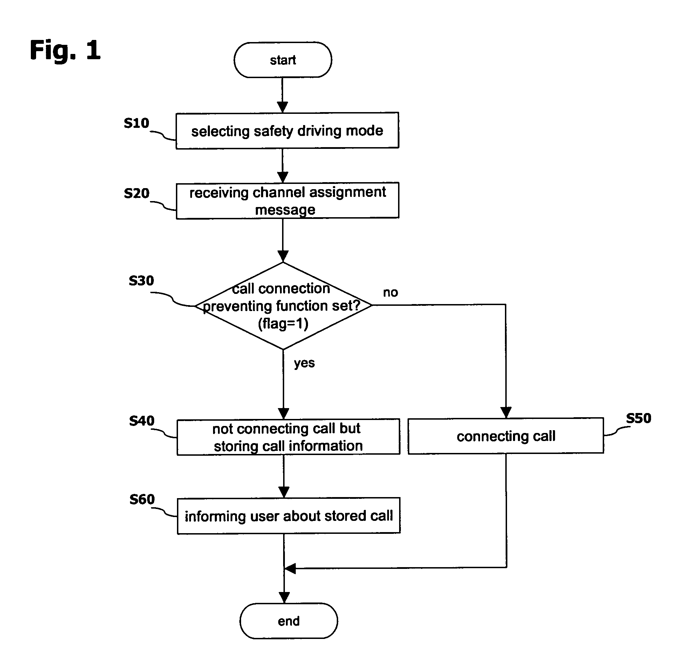

Figure 1 is a flow diagram illustrating a process of preventing call connection to a mobile terminal, according to an embodiment of the present invention.

Referring to Figure 1, the user may selectively set or release a 'safety driving mode' in a menu of 'my mobile phone management' provided in the terminal, for example. The safety driving mode may preferably be set as default unless it is released from the menu (step S10).

Alternatively, the user may personally select and set a speed at which call connection may be automatically prevented, as a function of the 'safety driving mode'. Alternatively, the user may selectively set a certain number of times that a handoff may occur during a predetermined time period as a reference value. In so doing, a call connection request of the another party may be prevented when the speed of the mobile terminal, i.e. the speed at which the mobile terminal is moving, is greater than or equal to the speed corresponding to the reference value.

In one embodiment, when the safety driving mode is set, if a channel assignment message is received from outside while the user is traveling at a high speed (step S20), the call connection prevention function is automatically set for the terminal (step S30). Therefore, an incoming call from another party may not be immediately connected. Instead, a phone number of the other party and a call request time may preferably be stored in the storage unit (step S40). When the user stops the car or is traveling at a low speed, the MPU may preferably inform the user of the stored call through a beeping or vibration.

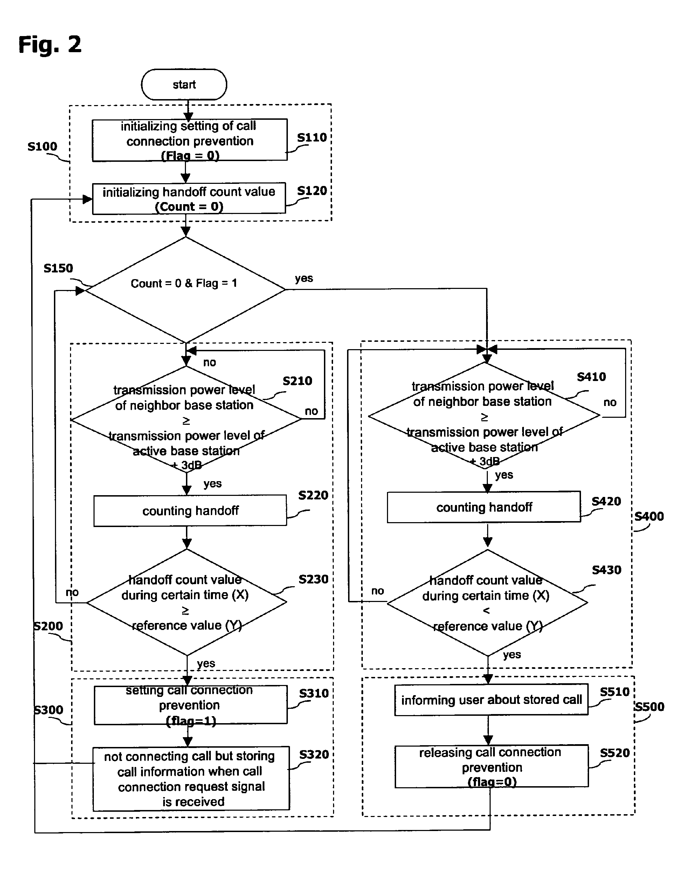

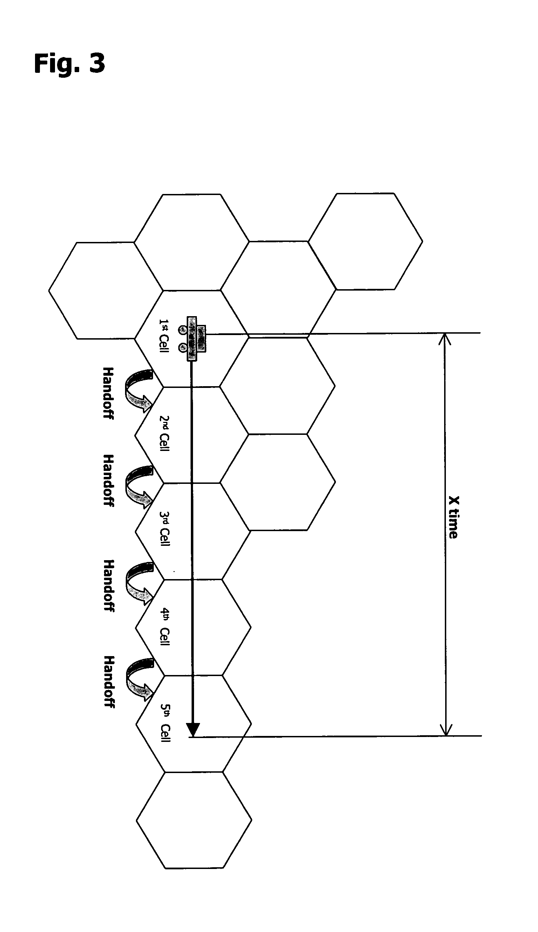

Figure 2 is a flow diagram illustrating a process from call connection prevention to releasing of call connection prevention of the mobile terminal, according to an embodiment of the present invention. Figure 3 is diagram illustrating occurrence of handoff during a predetermined time period, according to an embodiment of the prevent invention.

Referring to Figure 3, four handoffs occur in the terminal while the user travels within a mobile communication network during the predetermined time period (X time). The present invention is described in detail with reference to Figures 1 to 3, below.

In one embodiment, to detect a moving speed of the terminal, a corresponding variable value (flag = 0, Count = 0) may be initialized (step S100). The moving speed of the terminal may preferably be determined by detecting the number of handoffs that occur while the user is traveling within the mobile communication network during the predetermined time period (steps S200 and S400).

For example, with reference to Figure 3, if the user is traveling from a first cell corresponding to an active base station to a second cell corresponding to a neighboring base station, a transmission power level of the base station of the first cell may preferably decrease as the terminal comes closer to the base station of the second cell. Conversely, a transmission power level of the base station of the second cell may be correspondingly increased. Accordingly, when the transmission power level of the base station of the second cell reaches, for example, 3dB greater than the transmission power level of the base station of the first cell, the handoff may preferably occur (step S210). The number of handoffs may then be counted as '1' (step S220).

Similarly, in steps S210 and S220, the user travels from the second cell to a third cell, from the third cell to a fourth cell, and from the fourth cell to the fifth cell. During this traveling, handoffs may regularly occur (step S210) and the number of handoffs may be counted (step S220). Accordingly, while the user is traveling from the first cell to the fifth cell during the X time, a total of four handoffs occur and the count value of the handoff is four (step S220). In this respect, if the count value of, for example, four (=4) is equal to or greater than a Y value (such as, for example, Y=3) obtained as a handoff count value for high speed traveling according to field test results in the mobile communication network, it may preferably be determined that the terminal is moving at a high speed (step S230). In such case, the user may selectively set the Y value to prevent call connection to another party when the terminal is moving at or above a desired moving speed.

Thus, when the user with the terminal is traveling at a high speed and a call connection request is made from outside the terminal, the MPU may automatically be set to prevent call connection. That is, the MPU may deny the external call connection request. The MPU may preferably then store call information associated with the call connection request (step S300). For example, when an external channel assignment message is received by the terminal, the MPU may preferably set a flag as '1', for example (step S310). The MPU may then refuse to connect the received call to the terminal, and store a phone number for the call and/or a call request time in the storage unit (step S320).

Referring again to Figure 1, the count and flag values (Count=4, Flag=1) are modified during the course of the user's traveling (steps S200 and S300). The handoff count value (count value) may then be initialized (Count=0). However, since the flag value is still set as '1' (step S30), although a call connection signal (channel assignment message) may be received from outside (step S20), the call may not be connected to the terminal and corresponding call information may be stored in the storage unit. The stored call information may be provided to the user through beeping or vibration of the mobile terminal via the MPU under safe driving conditions, i.e. when the car is stopped or being driven at a low speed (step S60).

In another embodiment, a process for determining low speed traveling (step S400) is similar to determining the high speed traveling (step S200). For example, the process for determining the low speed traveling (step S400) may include a step (S410) for determining occurrence of a handoff; and a step (S420) of counting the number of times that a handoff has occurred (number of handoffs).

If the handoff count value (such as, for example, count=2) of the terminal during the predetermined time period (X time) is less than a pre-set reference value (such as, for example, Y=3) (step S430), the moving speed of the terminal may be determined to be a low speed and the user may be informed of the stored call by a beeping or vibration (step S510). After the step S510, the flag may be set as '0' to release the function of call connection prevention which was automatically set during the high speed traveling (step S520). Thus, when a channel assignment message is received from outside the terminal (step S20), the terminal may preferably immediately receive the alert with information message by checking the bell sound or vibration and receiving the call from the other party (steps S30 and S50).

In one embodiment, a method for managing call connection in a mobile terminal comprises detecting a moving speed of the mobile terminal and preventing call connection when the mobile terminal is moving at greater than a predetermined speed. The method may also comprise storing call information when the mobile terminal is moving at greater than the predetermined speed.

The predetermined speed may be an average speed over a predetermined time period. The detecting of the moving speed of the mobile terminal may comprise determining a location of the mobile terminal with respect to a plurality of cells within a predetermined time period. The detecting of the moving speed of the mobile terminal may further comprise counting a number of handoffs occurring during a predetermined time period. A handoff may occur when a transmission power level of a neighboring base station is at least 3dB greater than a transmission power level of an active base station. The detecting of the moving speed of the mobile terminal may further comprise determining a high speed if a count value obtained by counting the number of handoffs is greater than or equal to a predetermined reference value, and determining a low speed if the count value obtained by counting the number of handoffs is less than the predetermined reference value. The preventing of call connection may further comprise setting a flag. For example, the flag may be set at a first level to prevent call connection.

The call information may comprise at least one of a phone number of a mobile terminal requesting call connection and a call request time. The method may further comprise releasing the preventing of the call connection when stored call information is provided to a user. The releasing of the preventing of the call connection may further comprise setting a flag. For example, the flag may be set at a second level to release the preventing of the call connection. The method may further comprise providing stored call information to a user. The stored call information may be provided to the user when a count value of the number of handoffs occurring during a predetermined time period is less than a reference value. The reference value may be pre-set by the user. The detecting of the moving speed of the mobile terminal may alternatively comprise determining a location of the mobile terminal using a global positioning system.

In another embodiment, a method for managing call connection in a mobile terminal comprises counting a number of handoffs that occur in response to movement of the mobile terminal during a predetermined time period and comparing the number of handoffs against a reference value. The method also comprises preventing call connection associated with a call connection request if the number of handoffs is greater than the reference value. The method may further comprise storing call information associated with the call connection request if the call connection request is received while call connection is prevented and releasing the preventing of the call connection associated with the call connection request if the number of handoffs is less than the reference value. The method may further comprise providing stored call information associated with the call connection request to a user in response to the releasing of the preventing of the call connection associated with the call connection request. The reference value may be set by the user and may indicate a number of handoffs occurring during the predetermined time period corresponding to a certain moving speed of the mobile terminal.

In another embodiment, a mobile terminal configured to manage call connection comprises a microprocessor configured to count a number of handoffs during a predetermined time period as a user of the mobile terminal travels within a mobile communication network to detect a moving speed of the mobile terminal, the microprocessor also configured to automatically prevent call connection or to release prevention of call connection, based on a comparison of the number of handoffs against a reference value. The mobile terminal also comprises a memory communicatively coupled to the microprocessor, configured to store call information when a call connection request is received from another mobile terminal while call connection is being prevented. The mobile terminal also may comprise a notifying unit communicatively coupled to the microprocessor, configured to notify the user that call information associated with the call connection request is stored in the memory of the mobile terminal when the call connection to the another mobile terminal is not being prevented.

The mobile terminal may further comprise a display communicatively coupled to the microprocessor, configured to display the call information associated with the call connection request stored in the memory. The mobile terminal may further comprise a key pad communicatively coupled to the microprocessor, configured to enable the user to select and input the reference value. The moving speed of the mobile terminal may be determined, in the microprocessor, to be a high speed if the number of the handoffs is equal to or greater than the reference value, and a low speed if the number of handoffs is less than the reference value. The call connection may be prevented and the call information associated with the call connection request may be stored to the memory if the moving speed of the mobile terminal is the high speed. Alternatively, the call connection may be released or not prevented and stored call information associated with the call connection request may be provided to the user if the moving speed of the terminal is the low speed.

The notifying unit may comprise a speaker to notify the user that the call information associated with the call connection request is stored in the memory, by a notification sound. Furthermore, the notification unit may comprise a vibration device to notify the user that the call information associated with the call connection request is stored in the memory, by vibration.

The present invention may provide automatic prevention of call connection while the user is driving a car at a high speed so that the user is not distracted from driving. Furthermore, since call information of the prevented call is stored for later access, the user may check the call information when traveling at a low speed.

Although the invention is described with reference to measuring traveling speed of the mobile terminal by counting a number of handoffs, the invention may also be practiced using other forms of speed measurement. For example, the traveling speed of the mobile terminal may be determined by other methods involving a plurality of cells, such as angle of arrival (AOA), triangulation, or enhanced observed time difference (EOTD). Alternatively, the traveling speed of the mobile terminal may be determined using a global positioning system (GPS).

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A method for managing call connection in a mobile terminal, the method comprising:
detecting a moving speed of the mobile terminal; and
preventing call connection when the mobile terminal is moving at greater than a predetermined speed.

2. The method of claim 1, further comprising:
storing call information when the mobile terminal is moving at greater than the predetermined speed.

3. The method of claim 1, wherein the predetermined speed is an average speed over a predetermined time period.

4. The method of claim 1, wherein the detecting of the moving speed of the mobile terminal comprises determining a location of the mobile terminal with respect to a plurality of cells within a predetermined time period.

5. The method of claim 4, wherein the detecting of the moving speed of the mobile terminal further comprises counting a number of handoffs occurring during a predetermined time period.

6. The method of claim 5, wherein a handoff occurs when a transmission power level of a neighboring base station is at least 3dB greater than a transmission power level of an active base station.

7. The method of claim 5, wherein the detecting of the moving speed of the mobile terminal further comprises:
determining a high speed if a count value obtained by counting the number of handoffs is greater than or equal to a predetermined reference value; and
determining a low speed if the count value obtained by counting the number of handoffs is less than the predetermined reference value.

8. The method of claim 1, wherein the preventing call connection further comprises setting a flag.

9. The method of claim 8, wherein the preventing call connection further comprises setting the flag at a first level to prevent call connection.

10. The method of claim 2, wherein the call information comprises at least one of:
a phone number of a mobile terminal requesting call connection; and
a call request time.

11. The method of claim 2, further comprising releasing the preventing of the call connection when stored call information is provided to a user.

12. The method of claim 11, wherein the releasing of the preventing of the call connection further comprises setting a flag.

13. The method of claim 12, wherein the releasing of the preventing call connection further comprises setting the flag at a second level to release the preventing of the call connection.

14. The method of claim 2, further comprising providing stored call information to a user.

15. The method of claim 14, wherein the stored call information is provided to the user when a count value of the number of handoffs occurring during a predetermined time period is less than a reference value.

16. The method of claim 15, wherein the reference value is pre-set by the user.

17. The method of claim 1, wherein the detecting of the moving speed of the mobile terminal comprises determining a location of the mobile terminal using a global positioning system.

18. A method for managing call connection in a mobile terminal, the method comprising:
counting a number of handoffs that occur in response to movement of the mobile terminal during a predetermined time period;
comparing the number of handoffs against a reference value; and
preventing call connection associated with a call connection request if the number of handoffs is greater than the reference value.

19. The method of claim 18, further comprising:
storing call information associated with the call connection request if the call connection request is received while call connection is prevented;
releasing the preventing of the call connection associated with the call connection request if the number of handoffs is less than the reference value; and
providing stored call information associated with the call connection request to a user in response to the releasing of the preventing of the call connection associated with the call connection request.

20. The method of claim 18, wherein a handoff occurs when a transmission power level of a neighboring base station is at least 3dB greater than a transmission power level of an active base station.

21. The method of claim 18, wherein the reference value is set by the user.

22. The method of claim 21, wherein the reference value indicates a number of handoffs occurring during the predetermined time period corresponding to a certain moving speed of the mobile terminal.

23. A mobile terminal configured to manage call connection, the mobile terminal comprising:
a microprocessor configured to count a number of handoffs during a predetermined time period as a user of the mobile terminal travels within a mobile communication network to detect a moving speed of the mobile terminal, the microprocessor also configured to automatically prevent call connection or to release prevention of call connection, based on a comparison of the number of handoffs against a reference value;
a memory communicatively coupled to the microprocessor, configured to store call information when a call connection request is received from another mobile terminal while call connection is being prevented; and
a notifying unit communicatively coupled to the microprocessor, configured to notify the user that call information associated with the call connection request is stored in the memory of the mobile terminal when the call connection to the another mobile terminal is not being prevented.

24. The mobile terminal of claim 23, further comprising:
a display communicatively coupled to the microprocessor, configured to display the call information associated with the call connection request stored in the memory.

25. The mobile terminal of claim 23, further comprising:
a key pad communicatively coupled to the microprocessor, configured to enable the user to select and input the reference value.

26. The mobile terminal of claim 23, wherein, in the microprocessor, the moving speed of the mobile terminal is determined to be a high speed if the number of the handoffs is equal to or greater than the reference value, and a low speed if the number of handoffs is less than the reference value.

27. The mobile terminal of claim 26, wherein the call connection is prevented and the call information associated with the call connection request is stored to the memory if the moving speed of the mobile terminal is the high speed, and the call connection is released or not prevented and stored call information associated with the call connection request is provided to the user if the moving speed of the terminal is the low speed.

28. The mobile terminal of claim 23, wherein the notifying unit comprises a speaker to notify the user that the call information associated with the call connection request is stored in the memory, by a notification sound.

29. The mobile terminal of claim 23, wherein the notification unit comprises a vibration device to notify the user that the call information associated with the call connection request is stored in the memory, by vibration.
